# EUROPEAN PATENT SPECIFICATION

(11) **EP 2 297 474 B1**
(45) Date of publication and mention of the grant of the patent: **25.07.2012**
(21) Application number: 10703971.1
(22) Date of filing: 19.01.2010
(51) Int. Cl.: F16D 1/108, F16D 1/112, F16H 55/36

(54) **GEARMOTOR FOR SHUTTERS AND RELATIVE BLOCKING DEVICE FOR A PULLEY**
GETRIEBEMOTOR FÜR FENSTERLÄDEN UND ENTSPRECHENDE SPERRVORRICHTUNG FÜR EINE RIEMENSCHEIBE
MOTEUR À ENGRENAGES POUR VOLETS ET DISPOSITIF DE BLOCAGE LIÉ DE POULIE

(30) Priority: 28.01.2009 IT PN20090008
(43) Date of publication of application: 23.03.2011
(73) Proprietor: Nice S.p.A., 31046 Oderzo (Treviso) (IT)
(72) Inventor: MALAUSA, Andrea, I-31046 ODERZO (Treviso) (IT)
(74) Representative: Citron, Massimiliano
(86) International application number: PCT/IB2010/050231
(87) International publication number: WO 2010/086761

(56) References cited:
- WO-A-2006/061349
- DE-A1- 10 149 089
- DE-C- 814 352

## Description

The invention refers to a gearmotor for shutters and relative blocking device for a pulley.

Tubular gearmotors for the movement and/or automation of shutters, like blinds, rolling shutters and curtains, are currently made in a way so as to be able to be inserted inside a drum around which the shutter itself is wound (and unwound). They mainly comprise an electric motor, a reduction gear and an end-stop-device, housed inside a tubular body. At about the ends of the tubular body two pulleys are provided for transmitting the rotatory motion from the gearmotor to the shutter drum and from the drum to the end-stop-device, respectively.

The transmission pulleys usually have a grooved outer profile matching the inner shape of the shutter drum. The first pulley is mounted around a pin coming out from the gearmotor, whereas the second one is mounted around the end-stop-mechanism. The invention concerns the first pulley, which is usually fixed to the rotating pin with special fixing means, as described for example in the patent EP 1 819 949. Bearing in mind that the trend of the market is to demand increasingly cost-effective and compact gearmotors, and especially short, it should be understood that this solution has the drawback that particularly the longitudinal size of the output pin cannot fall below a certain limit, since the locking of the pulley necessarily provides the axial displacement of a button inside the pin (reference numeral 50 in fig. 1 of EP 1 819 949), i.e. along the very same direction which is wished to be reduced. Moreover, the structure of the button is very sophisticated, because it comprises two flexible V-shaped rods that bear a stopping tooth for the pulley. Therefore, it is not very apt to be reduced in scale and therefore it does not allow the contraction of the sizes of the pin even in a radial direction; moreover, it cannot be used in gearmotors having small outer diameters (or inner diameter of the drum), for example smaller than 35mm.

The same can be said, for example, also for EP 0 292 259, which has a stop element axially movable on the pin, and therefore does not have a structure such as to facilitate or promote the shortening of the pin. *The generic* DE 1010 49 089 *discloses an assembly comprising a motor and at least one functional part attached to the motor shaft. There is an adapter element attached to the output shaft which can rotate with the shaft and is connected to the functional part in* a *shape-locking manner.* The main object of the invention is to provide a gearmotor for shutters, with a blocking device for a pulley, which has small dimensions and which can be easily and quickly operated by the user without the use of any special equipment.

A further object is to ensure that the blocking device does not require a longitudinal manoeuvring movement, thus promoting a reduction of the overall dimensions.

Such objects are achieved with a gearmotor for shutters comprising the features of claim1.

The advantage of activating the locking element through rotation and not translation allows the gearmotor to be shortened.

Elastic means are preferably used for drawing the locking element back into the locked position, so that it returns there automatically from the release position after the action of the user.

In order to simplify the structure of the pin, the locking element can be mounted at or on the free end of the pin, for example, coaxially with it, so that when the locking element rotates, it can completely or partially move outside the profile or section of the pin to oppose a slipping off of the pulley.

Other variants are defined in the dependent claims.

The advantages and the characteristics of the invention shall become clearer from the following description of an example embodiment, with the attached drawing in which:
fig. 1 shows a partial exploded view of a gearmotor with a blocking device according to the invention;
fig. 2 shows a side view of the end of the gearmotor of fig. 1;
fig. 3 is a front view according to the arrow F in fig. 2 in a first configuration;
fig. 4 is a section view according to the plane IV-IV in fig. 2 in the first configuration;
fig. 5 is a front view according to the arrow F in fig. 2 in a second configuration;
fig. 6 is a section view according to the plane IV-IV in fig. 2 in the second configuration;
fig. 7 is a section view according to the plane VII-VII in fig. 2 without a component.

In the figures the gearmotor is made up of an electric motor (not shown), a reduction gear (not shown), both contained inside a tubular body 10. At the end of the body 10 a hollow grooved pin 12 is provided. The pin 12 can rotate about an axis X and it has an outer perimetral profile, or cross section, matching the perimetral profile of a seat or through-cavity 46 formed at the centre of a pulley 44. In this way the pulley 44 can be keyed onto the pin 12.

A stop or locking element (or means) 30 for the pulley 44 is arranged at the end of the pin 12.

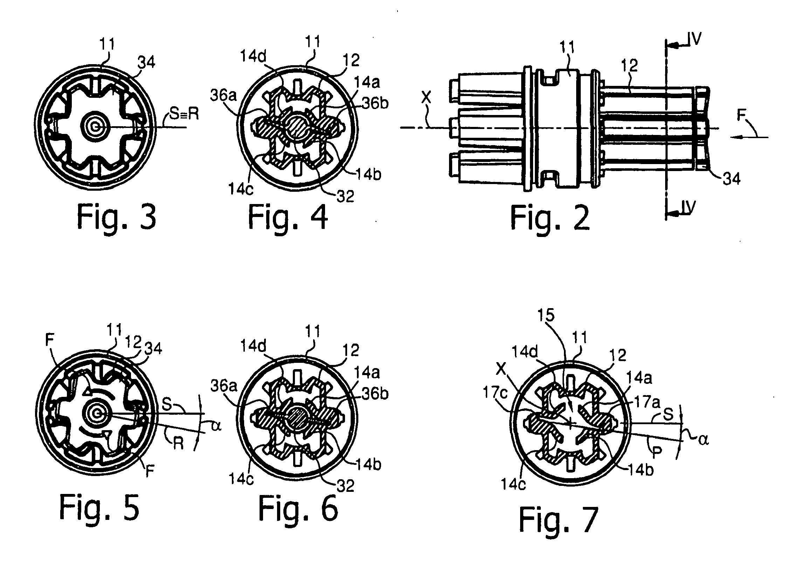

A seat or cavity 15 is provided inside the pin 12, for housing the locking element 30. Such a seat 15 has a longitudinal development about and along the axis X and it has two pairs of tabs 14a-14b and 14c-14d that extend from its walls and spread apart inwards (see fig. 4, 6 and 7).

The free ends of the tabs 14a-14b-14c-14d have a substantially circumferential arc-shaped profile, they are symmetrical to one another and form the contact surfaces with the element 32. Between the bases of each pair of tabs 14a-14b and 14c-14d there are two slots 17a and 17c, respectively, that extend inside the pin 12. They are the same as one another and lie on a plane P (fig. 7) which is rotated by an angle α with respect to a plane S passing by the axis X. Except for the slots 17a and 17c, the plane S is a plane of symmetry for all the remaining structure of the pin 12.

In particular, the apex of the slot 17a is, with respect to the plane S, shifted farther towards the tongue 14b, whereas the apex of the slot 17c is more shifted towards the tongue 14d.

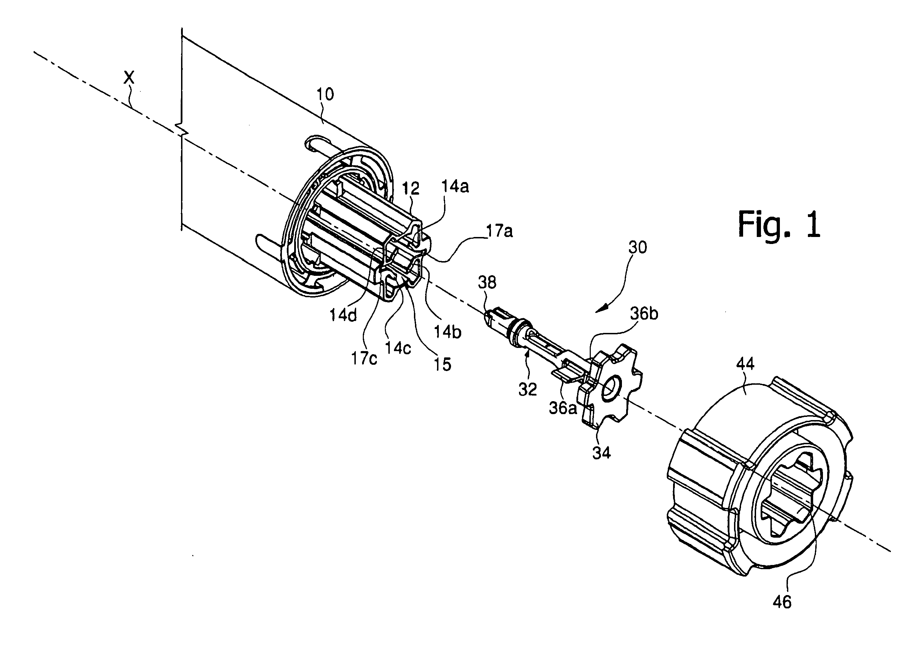

The element 30 comprises a head 34 and a body 32. The head 34 and the pin 12 have the same outer perimetral profile or section. Two tongues 36a and 36b, which are flexible and elastic and diametrically opposite one another and on the same plane, extend from nearly the centre of the body 32. At the opposite end of the head 34 there is a pair of protruding symmetrical teeth 38 (the second cannot be seen in fig. 1). The element 30 (by itself) is overall symmetric with respect to a mid-plane.

The locking element 30 for the pulley 44 operates as follows.

The element 30 is inserted in the pin 12, arranging it in the seat 15 so that the body 32 is arranged resting and inside said tongues 14a-14b-14c-14d (fig. 4 and 6). The tongues 36a and 36b respectively engage with the corresponding (and almost complementary) slots 17a and 17c, and the teeth 38 lock inside the bottom of the seat 15 in a suitable seat (not shown), staying held thereby. This avoids that the element 30 is unintentionally pulled away from the pin 12.

Due to the position of the slots 17a and 17c, rotated by the angle α with respect to the plane S, also the position of the element 30 is rotated by the same angle α. Consequently, the outer perimetral profile of the head 34 does not overlap the corresponding outer perimetral profile of the pin 12, but it is also rotated by an angle α (fig. 5).

Thanks to the elasticity of the structure and, in particular, of the tongues 36a and 36b, the element 30 can rotate (at least by an angle equal to α) inside and with respect to the pin 12 about the axis X in an elastic way. It should thus be noted how effective the solution is, allowing the element 30 to easily be equipped with elastic means to elastically keep it in the locking position.

In order to be able to insert the pulley 44 on the pin 12 (position of fig. 3 and 4) it is necessary for the outer perimetral profile of the head 34 to match up with the outer perimetral profile of the pin 12. It is sufficient to rotate the head 34 of the element 30 (see arrow F in fig. 5) a little, overcoming the elastic reaction of the tongues 36a and 36b which slightly bend sliding inside the slots 17a and 17c (fig. 3 and 4). Once the pulley 44 has been inserted on the pin 12, the head 34 is released, said head being brought back to the initial position of fig. 5, i.e. rotated by an angle α with respect to the pin 12, by the elastic reaction of the tongues 36a and 36b.

It should be noted that the insertion can be even simpler, since once the element 30 has been inserted into the pin 12, the user can take the pulley 44 in his hand and insert it over the head 34. Then he rotates it by the small amount needed (by an angle α) in order to align it with the grooved profile of the pin 12, and finally push the pulley 44 on the pin 12.

In order to remove the pulley from the pin 12, the above is carried out in reverse. It is sufficient to slightly rotate the head 34 by hand (or wrench) bringing it into alignment with the profile of the pin 12, overcoming the small elastic force of the tongues 36a and 36b which bend. With the head 34 aligned, the pulley 44 can be slipped off from the pin 12 along the axis X.

## Claims

1. Gearmotor for shutters comprising
a rotating pin (12) on whose outer side surface a pulley (44) can be keyed, the rotating pin (12) being equipped with
a locking element (30) operable by a user and movable with respect to the pin between a first blocking position wherein it holds the pulley (44) and a second release position wherein it does not hold it and the pulley may be slipped off the pin,
wherein
the locking element (30) is adapted to move between said first and second position following a rotation and **characterized in that** the gearmotor
comprises elastic and/or spring- means (36a, 36b) for returning the locking element (30) in the first blocking position, so that it automatically returns thereto from the release position after the user's action.

2. Gearmotor according to claim 1, wherein the locking element (30) is mounted at or onto the free end of the pin.

3. Gearmotor according to any of the preceding claims, wherein the locking element is mounted on the pin coaxially to it, so that the locking element while turning can move completely or partly outside the pin's profile in order to oppose to the pulley's slipping off.

4. Gearmotor according to any of the preceding claims, wherein the locking element is formed by a head (34) and an elongated body (32), the body being housed inside an axial cavity (15) of the pin and the head being able to rotate outside of the pin's free end.

5. Gearmotor according to any of the preceding claims, wherein the elastic means comprise a flexible portion (36a, 36b) of the blocking element and/or the pivot.

6. Gearmotor according to claim 5, wherein the flexible portion includes radial protruding tabs (36a, 36b) which are integral with said body, while said cavity has seats (17a, 17c) to receive the radial tabs, or vice versa.

7. Gearmotor according to claim 6, wherein from the walls of said cavity extend symmetrical pairs of fins (14a, 14b, 14c, 14d), between each pair of fins being present a slot (17a, 17c) having a nearly V-profile adapted to receive a radial tab.

8. Gearmotor according to claim 7, wherein the development of said slots lies substantially on a plane inclined with respect to a symmetry plane for the external section of the pin.

9. Gearmotor according to any of the claims from 4 to 8, wherein said head (34) has a section substantially equal to that of the pin, so that a rotation of the head allows to align it or not with the section of the pin thereby allowing or not the pulley to slip off.

## Patentansprüche

1. Getriebemotor für Rollläden, bestehend aus
einem Drehzapfen (12), auf dessen seitlicher Außenfläche eine Riemenscheibe (44) aufgeschrumpft sein kann. Ausgestattet ist der Drehzapfen (12) mit
einem vom Benutzer bedienbaren Verriegelungselement (30), das zwischen einer Verriegelungsposition für die Riemenscheibe (44) und einer zweiten Freigabeposition, in der sie nicht festgehalten wird und aus welcher der Zapfen ausgezogen werden kann, bewegbar ist,
wobei das Verriegelungselement (30) zum Verschieben zwischen dieser ersten und zweiten Position nach einer Drehung geeignet ist,
**dadurch gekennzeichnet,**
**dass** der Getriebemotor elastische und/oder gefederte Vorrichtungen (36a, 36b) aufweist, damit das Verriegelungselement (30) in die Verriegelungsposition rückgeholt werden kann, damit es nach der Betätigung des Benutzers automatisch in die Freigabeposition zurückkehrt.

2. Getriebemotor nach Anspruch 1, bei dem das Verriegelungselement (30) an oder auf den freiem Enden des Zapfens montiert ist.

3. Getriebemotor nach einem beliebigen der vorhergehenden Ansprüche , bei dem das Verriegelungselement koaxial am Zapfen anmontiert ist, damit sich das Verriegelungselement während der Drehung ganz oder teilweise außerhalb des Zapfenprofils verschieben kann, um nicht aus der Riemenscheibe zu fallen.

4. Getriebemotor nach einem beliebigen der vorhergehenden Ansprüche, bei dem das Verriegelungselement aus einem Kopfteil (34) und einem länglichen Körper (32) besteht, wobei sich der Körper in einem axialen Hohlraum (15) des Zapfens befindet und sich der Kopfteil außerhalb des freien Zapfenendes bewegen kann.

5. Getriebemotor nach einem beliebigen der vorhergehenden Ansprüche, bei dem die elastischen Vorrichtungen einen flexiblen Teil (36a, 36b) des Verriegelungselements und/oder des Zapfens enthalten.

6. Getriebemotor nach Anspruch 5, bei dem der flexible Teil radial überstehende Federn (36a, 36b) aufweist, die fest mit diesem Körper verbunden sind, wohingegen der genannte Hohlraum Aufnahmen (17a, 17c) für die Radialfedern hat oder umgekehrt.

7. Getriebemotor nach Anspruch 6, bei dem sich an den Wänden dieses Hohlraums symmetrische Flügelpaare (14a, 14b, 14c, 14d) befinden. Zwischen jedem Flügelpaar gibt es einen Schlitz (17a, 17c) mit V-förmigem Profil zur Aufnahme einer Radialfeder.

8. Getriebemotor nach Anspruch 7, bei dem sich der Verlauf dieser Schlitze im Wesentlichen auf einer im Vergleich zu einer Symmetrieebene geneigten Fläche für den Außenschnitt des Zapfens befindet.

9. Getriebemotor nach einem beliebigen der Ansprüche 4 bis 8, bei dem dieser Kopfteil (34) im Wesentlichen denselben Querschnitt wie der Zapfen aufweist, sodass er durch eine Drehung des Kopfteils mit dem Zapfenschnitt ausrichtbar ist und die Riemenscheibe abziehbar wird.

## Revendications

1. Motoréducteur pour stores roulants, comprenant
un axe pivotant (12), sur la surface latérale externe duquel peut s'emboîter une poulie (44), l'axe pivotant (12) étant doté
d'un élément de blocage (30) actionnable par un utilisateur et mobile entre une première position de blocage dans laquelle il retient la poulie (44) et une deuxième position de relâchement dans laquelle il ne la retient pas, raison pour laquelle celle-ci peut être dégagée de l'axe,
l'élément de blocage (30) étant en mesure de se déplacer entre ces première et deuxième positions à la suite d'une rotation,
**caractérisé par le fait que**
le motoréducteur comprend des moyens élastiques (36a, 36b) et/ou à ressort permettant de ramener l'élément de blocage (30) dans sa position de blocage, de manière à ce que celui-ci revienne automatiquement dans cette position à partir de sa position de relâchement après action de l'utilisateur.

2. Motoréducteur selon la revendication 1, dans lequel l'élément de blocage (30) est monté sur l'axe ou sur l'extrémité libre de celui-ci.

3. Motoréducteur selon l'une quelconque des revendications précédentes, dans lequel l'élément de blocage est monté sur l'axe coaxialement à celui-ci, de façon à ce que l'élément de blocage, en pivotant, puisse se déplacer complètement ou partiellement à l'extérieur du profil de l'axe pour s'opposer au dégagement de la poulie.

4. Motoréducteur selon l'une quelconque des revendications précédentes, dans lequel l'élément de blocage est formé d'une tête (34) et d'un corps allongé (32), le corps étant logé à l'intérieur d'une cavité axiale (15) de l'axe et la tête pouvant pivoter à l'extérieur de l'extrémité libre de l'axe.

5. Motoréducteur selon l'une quelconque des revendications, dans lequel les moyens élastiques comprennent une portion flexible (36a, 36b) de l'élément de blocage et/ou de l'axe.

6. Motoréducteur selon la revendication 5, dans lequel la portion flexible comprend des languettes radiales faisant saillie (36a, 36b) qui sont solidaires de ce corps, tandis que la cavité précitée possède des logements (17a, 17c) destinés à recevoir les languettes radiales, ou inversement.

7. Motoréducteur selon la revendication 6, dans lequel des couples symétriques d'ailettes (14a, 14b, 14c, 14d) se déploient à partir des parois de la cavité, une fente (17a, 17c) dotée d'un profil pratiquement en V étant présente entre chaque couple d'ailettes pour recevoir une languette radiale.

8. Motoréducteur selon la revendication 7, dans lequel le développement des fentes susdites se trouve essentiellement sur un plan incliné par rapport à un plan de symétrie pour la section externe de l'axe.

9. Motoréducteur selon l'une quelconque des revendications 4 à 8, dans lequel la tête (34), en substance, a une section identique à celle de l'axe, de manière à ce qu'une rotation de la tête permette d'aligner ou non celle-ci par rapport à la section de l'axe, tout en permettant ou non à la poulie de se dégager.
